# EUROPEAN PATENT APPLICATION

(11) **EP 4 043 416 A1**
(43) Date of publication of application: **17.08.2022**
(21) Application number: 21156975.1
(22) Date of filing: 12.02.2021
(51) Int. Cl.: C04B 28/02, C04B 28/08, C04B 111/28, C04B 28/00, C09K 5/08

(54) **THERMAL ENERGY STORAGE MEDIA BASED ON CONCRETE AND USE OF HYBRID CEMENT AS A BINDER FOR PRODUCTION OF SUCH CONCRETE MEDIA**

(71) Applicant: Povazská cementáren, a.s., 01863 Ladce (SK); Consejo Superior de Investigaciones Cientificas M.P., 28006 Madrid (ES); Centro de Física de Materiales, 20018 Donostia - San Sebastián (Gipuzkoa) (ES); Donostia International Physics Center, 20018 Donostia - San Sebastián (Gipuzkoa) (ES)
(72) Inventor: Sánchez Dolado, Jorge, 20170 Usurbil, Gipuzkoa (ES); Goracci, Guido, 20110 Pasai San Pedro, Gipuzkoa (ES); Martauz, Pavel, 911 01 Trencín (SK); Cvopa, Branislav, 018 63 Ladce (SK)
(74) Representative: Kubinyi, Peter

(57) **Abstract**

Thermal energy storage media based on concrete, comprising alkali activated binder and an aggregate, where the alkali activated binder is hybrid cement and the aggregate is chosen from siliceous aggregate, steel slag aggregate or copper slag aggregate, or their mixtures, in the amount up to 75% by wt. in the concrete.

## Description

### Technical Field

Present invention relates to a thermal energy storage media based on alkali activated concrete, for high temperature applications and use of hybrid cement as a binder for production of such concrete media.

### Background Art

Energy supply is a vital issue, with special concerns of the public regarding the emission of greenhouse gases and the need to reduce the use of fossil fuels (see Zhang et al., Prog. Energy Combust. Sci. 2016). The worldwide economic crisis since 2008 added additional challenges, leading worldwide governments to enact new policies and financial incentives in support of renewable energies.

Among renewable resources, solar energy is the most promising due to the great quantities of solar irradiation flux arriving on earth. In particular, concentrated solar power (CSP) is a very attractive technology due to its advantages in terms of high efficiency, low operating cost and good scale-up potential. CSP technology is already developed and available for commercialization. However, the energy cost per kilowatt hour from current solar energy plants is high. Such a drawback is mainly due to the temporal intermittency of solar energy. To overcome this problem, one solution is to use thermal energy storage (TES) system to store heat during sunshine periods and release it during the periods of weak or no solar irradiation.

Moreover, the residual energy from low demand periods can be used to charge a TES, to have backup energy for high-demand periods and periods of low solar availability.

There are currently three kinds of TES systems available: sensible heat storage, latent heat storage and thermo-chemical heat storage. Sensible heat storage systems are the most mature and simple

The performance of a TES system depends strongly on the thermal properties of the material. These properties include thermal conductivity k, specific heat capacity cₚ, and the density ρ.

In fact, the amount of thermal energy stored in a mass of material (Q) can be expressed as: *Q = ρ cₚ · V · ΔT*, where Q is the amount of heat stored, V is the volume of storage material used and ΔT is the temperature range of operation. Moreover, a high thermal conductivity improves transient heat transfer and, hence, shortens the time for charging and discharging processes. Other important storage material requirements include high availability, low capital costs, safety, high thermal (cycling) stability, and easy processing.

Thus, in general a good TES must have
(i) A good capacity to storage thermal energy (quantified by the cumulative heat energy, Q= r cₚ V ΔT)
(ii) Large velocity to release and storage heat (quantified by the thermal diffusivity, λ=k/(ρ cₚ) where k is the thermal conductivity)
(iii) Stability and durability over a large ΔT range (something that can be quantified by mechanical measurements or TGA analysis...), and must be
(iv) Cheap, available, non-toxic and non-corrosive.

State of the art storage materials are molten salts. However, molten salts freeze at 220 °C. Consequently, TES systems with molten salts require quite expensive anti-freeze systems. Moreover, molten salts have a low thermal conductivity and are very corrosive. Therefore, many studies have been carried out to find alternative storage materials. In this scenario, it is not surprising that the possibility of using solid materials like castable ceramics or concrete was immediately proposed and studied (see Laing et al. Sol. Energy 2006). Overall, concrete presented itself as a good solid material for TES applications, as it has a low price and has, in general, relatively good thermal capacities. As can be seen in the Table 1, thermal properties of concrete are in between those of molten salts and castable ceramics, resulting in a cheap "compromise" in terms of heat storage capacities (Cp) and thermal diffusivities (λ)(=k/ρcₚ).

**Table 1**

| MATERIAL | Molten Salts | Castable Ceramic | HighT Concrete |
|---|---|---|---|
| Cp [J/(gxK)] | 1.6 | 0.86 | 0.91 |
| λ[mm²/s] | ∼ 0.26 | 0.43 | 0.39 |
| price [euros/tonne] | 300 | 4500 | 80 |

Thermal storage of sensible heat using concrete is at present a known procedure. Indeed, TES with concrete as storage material have been already tested for CSP applications. Deutsche Luftraum (DLR) Zentrum built storage units at the Plataforma Solar de Almeria (PSA) in Spain using high temperature concrete (see Laing et al. Sol. Energy 2006). In addition, the Department of Civil Engineering of the University of Arkansas (UA) evaluated the concrete's performances and worked to develop a concrete to be used as a TES medium (see Skinner et al. J. Sol. Energy Eng. 2013).

Different strategies have been reported in the state of the art to increase the performance of concrete as TES media but, to our understanding, they have limited themselves to improve the mixing of concrete rather than undertaking an in-deep analysis of the concrete's structure-performance linkages.

For instance, the need of resistance and stability at high temperatures (i.e. greater than 300°C) has been achieved by playing with the aggregates. It is well known in that certain aggregates like basalt or granite-like aggregates improve the ability of concrete to withstand higher temperatures, and therefore they are routinely employed in construction whenever high-temperature Ordinary Portland (OPC) concretes are needed (see Z. Bazant and M.F. Kaplan; Concrete at High Temperature; Person Education). This is in general terms, the strategy employed by the group of the German Aerospace Center (DLR) and colleagues (see for instance D. Laing and S. Zunft; "Using concrete and other solid storage media in thermal energy storage (TES) systems"; Advances in Thermal Energy Storage Systems, and references therein) to propose their TES-based concretes.

As concrete contains water, another aspect of main concern has been the requirement of certain structural permeability to let free water evaporate without compromising the structure when the concrete is heated above 100 °C. For this, both the "DLR team" and the Italian groups working under the umbrella of ENEA (Italian National Agency for New Technologies, Energy and Sustainable Economic Development) have proposed the same type of solution: the use of small amounts of fibres (polyethylene fibres in the case of the "DRL team" (see D. Laing et al.; Proceedings of the IEEE ; Vol.100,No.2, 10.1109/JPROC.2011.2154290) and nylon fibres in the case of the "ENEA team" (see V. A. Salomoni et al; Solar Energy 103 (2014) 303-315).

Improvements of poor thermal conductivity of OPC-based concretes have been the main technological challenge and various solutions have been investigated. One way is to introduce high conducting metal or graphite fibres, splinters or even including three-dimensional structures (called heat transfer structures), but the additional costs largely overweigh the benefits (see D. Laing et al.; Proceedings of the IEEE ; Vol.100,No.2, 10.1109/JPROC.2011.2154290). In general, the thermal conductivity of the OPC concrete-based TES systems has been improved with respect to normal concretes by playing with the aggregates, and the best performances are still modest. Even, the recently released HEATCRETE solution proposed by Energy Nest company (Norwegian company commercializing concrete-based TES modules) in collaboration Heidelberg Cement (see Report "Initiative for Global Leadership in Concentrated Solar Power" belonging to the EU's 'Towards an Integrated Strategic Energy Technology (SET) Plan) offers thermal diffusivities about 0.5 mm²/s at 400°C, a value often found in high temperature concretes containing igneous crystalline aggregates (basalt-like and granite-like) or silicious crystalline aggregates (quartzite). While the exact recipe of HEATCRETE is not known, it is however known that its main component is quartzite.

However, neither the energy storage capacity nor the thermal stability have not been optimized, as they have been taken as an inherent limit of OPC's concretes. Indeed, current research focuses on the development of appropriate OPC concrete mixing to increase thermal performances and durability performances in high temperature range but obliterates the chances given by other cement binders.

A study is known, Preparation and Properties of Alkali-Activated Ground-Granulated Blast Furnace Slag Thermal Storage Concrete, 4th International Conference on the Durability of Concrete Structures, 24-26 July 2014, Purdue University, West Lafayette, IN, USA.

The study introduces thermal storage concrete prepared by using alkali-activated ground-granulated blast furnace slag as cementitious material. To improve thermal conductivity, graphite aggregate is used to replace part of the coarse aggregate, and, furthermore, polypropylene fiber is added to improve the heat resistance performance of the concrete. The compressive strength of concrete specimens before and after heating (up to 450 °C) was tested, and, furthermore, scanning electron microscopy was used to investigate the structure alteration due to heating. Results showed that the partial replacement of coarse aggregate by graphite block could obviously improve the thermal conductivity of the thermal storage concrete. At the same time, the specimen with 30% graphite aggregate replacement still exhibited good mechanical properties. The mechanism of the high residual strength was investigated.

Further study is known, Alkali-Activated Cements for TES Materials in Buildings' Envelops Formulated With Glass Cullet Recycling Waste and Microencapsulated Phase Change Materials, Jessica Giro-Paloma et.al, Materials 2019, 12, 2144, published 3 July 2019,
Purpose of this study is a development of alkali-activated cements (AACs) with mechanical properties to store high amounts of heat. These AACs incorporate wastes from industrial glass process as well as microencapsulated phase change materials (mPCMs) to improve the thermal inertia of building walls, and accordingly respective energy savings. The material developed was resistant enough to perform as insulating panels. The formulated materials had high storage capacity depending on the PCM content. Durability of the mPCM shell was studied in contact with alkaline medium (NaOH4 M) and no degradation was confirmed. Moreover, the higher the content of mPCM, the lower
the mechanical properties expected, due to the porosity increments with mPCM incorporation in the formulations.

Object of the present invention is thus to provide a thermal energy storage media based on alkali activated concrete capable of exhibiting high heat capacities, high thermal diffusivities and ultra-high temperature stability/integrity.

### Summary of invention

Said object is achieved by a thermal energy storage media based on concrete, comprising alkali activated binder and an aggregate, according to the invention characterized in that the alkali activated binder is hybrid cement. Hybrid cement is understood here, and also further in description of embodiments, as a cement comprising Portland siliceous clinker in the amount of 5 to 40 wt%, preferably 10 to 30 wt%, 94.5 to 50 wt% of fly ash, or a mixture of fly ash and metallurgical slag, or metallurgical slag, and an alkaline activator in the amount of 0.5 to 10 wt.%, preferably 3 to 7 wt%, where the alkaline activator are alkaline wastewaters, leachates of red and brown mud landfills, red and brown mud being the waste from alkaline leaching of bauxite in Al₂O₃ production, and products formed thereof in the amount having content of active alkaline compound analytically represented as 0.01 to 6.5 wt% %NaO. The aggregate is chosen from silicious aggregate, steel slag aggregate or copper aggregate, or their mixtures, in the amount up to 75 wt% in the concrete.

Preferably, the products produced from the alkaline wastewater and/or leachate are thick concentrate with high content of Na⁺ and OH⁻ and/or dry residue thereof, and/or salts from the alkaline wastewaters and/or leachates neutralization, and/or mixture of said salts with alkaline waters, leachates, concentrate, dry residue.

Preferably, the salts from the alkaline wastewaters and/or leachates neutralization, concentrate, dry residue are sulphates SO₄²⁻, sulphites SO₃²⁻, carbonates CO₃²⁻, hydrogen carbonates HCO₃⁻, silicates SiO₄⁴⁻, SiO₃²⁻, non-stoichiometric silicates Si_{X}O_{Y}^{Z-}, with predominantly bound Na⁺.

Preferably, the alkaline wastewaters and/or leachates, and/or concentrate contain an addition of acid H₂SO₄, H₂SO₃, H₂CO₃, and/or nano-SiO₂, micro-SiO₂, silica fume SiO₂ and/or gaseous SO₃, SO₂ and CO₂.

Preferably, the alkaline wastewaters and/or leachates, and/or concentrate and products formed thereof contain an addition of waste inorganic salts based on Na₂SO₄, Na₂SO₄.10H₂O, Na₂SO₃, Na₂CO₃, Na₂CO₃.10H₂O, NaHCO₃, Na₄SO₄, Na₂SiO₃ and/or K₂SO₄, K₂SO₃, K₂CO₃, KHCO₃, K₄SiO₄, K₂SiO₃.

Said hybrid cement is substantially described in patent document SK 288418 B6 of Považ̌ská cementáreň, a.s., as one of the applicants of this application.

Document SK 288418 B6 discloses alkali activated binder - hybrid cement produced at industrial scale. It is known that other alkali activated hybrid binders are prepared at laboratory scale or imitated by batching of separate components directly in in production of concrete mixture. Object of the solution according to SK 288418 B6 was to reduce CO₂ emissions and to make use of hazardous alkaline industrial waste to reduce environmental burden. The inventors of this application unexpectedly found that a concrete produced with the hybrid cement provides for concrete thermal energy storage media with improved performance at high temperatures.

Object of the present invention is therefore also met by use of the above described hybrid cement as a binder for production of concrete thermal energy storage media.

Thermal energy storage media according to the invention is especially suited to work at high temperatures, i.e. in the range between 400°C and 650°C, a temperature range where the concrete-based TES solutions do not work.

In comparison to previous TES media based on concrete, present invention offers a better performance at higher temperatures, and offers the opportunity of going beyond current limit of ∼450°C. Operations at higher temperatures, T> 450°C is especially appealing from a practical point of view, since the power block efficiency of Concentrated Solar Plants (CSP) largely increases with temperature. Indeed, one of current perspectives in the optimization of the CSPs is the operation at higher temperatures, about 500 °C and 60 0°C, replacing, for instance, the oil by steam water as heat transfer fluids. In terms of the TES media, this increase in the operation temperature of CPSs makes unviable the use of concrete-based TES, so advanced high temperature molten salts are currently being searched for (see for instance Report "Initiative for Global Leadership in Concentrated Solar Power" belonging to the EU's 'Towards an Integrated Strategic Energy Technology (SET) Plan). However, present invention offers again the possibility of using concrete-based TES solutions at these high temperatures.

Overall characteristics of the TES media according to present invention are:
- Heat capacities >0.85 J/g/K in the whole range between T=200 °C and 600 °C. Usually larger than 1 J/gK in the same range;
- Thermal diffusivities > 0.5 mm²/s in the whole range between T=200 °C and 400 °C, but still larger than 0.4 mm²/s up to 600 °C;
- Thermal stabilities given by mass losses lower than 1% after several cycles (4) of temperature changes between 250 °C and 450 °C. In some particular cases, below 0.5%.

### Brief description of drawings

Fig. 1 shows graph representing the impact of the amount of aggregates on the heat capacity of TES media according to this invention.
Fig. 2 shows graph representing specific heat capacity of TES sample containing silicious aggregate in amount of 75 wt%, also as S75, in the concrete composition.
Fig. 3 shows graph representing specific heat capacity of TES sample containing steel slag aggregate in amount of 75 wt%, also as LKS, in the concrete composition.
Fig. 4 shows graphs of thermogravimetric analysis measurements of S75.
Fig. 5 shows graphs of thermogravimetric analysis measurements of LKS.
Fig. 6 shows graph with results of thermal diffusivity of different TES media compared to Hybrid Cement and LKS specimen.
Fig. 7 shows graph representing specific heat capacity of TES sample containing copper slag in the concrete composition.
Fig. 8 shows graph of thermogravimetric analysis measurements of copper slag, also as BLACK.
Fig. 9 shows graph of thermal diffusivity of copper slag.

### Description of embodiments

In order to show characteristics of the TES media according to this invention, several examples are introduced.

In general, as will be shown, for pursued high temperature operations (T>400°C), sufficiently good heat capacities (Cp close or higher than 1.0 J/g°C) can be obtained with aggregate/cement ratios up to 0.75.

Later, the thermal diffusivities and the thermal stability can be tuned with appropriate aggregate selections.

### Example 1

In this example, the impact of the amount of aggregates on the heat capacity is analyzed. Samples were prepared with a typical silicious aggregate. Mix proportions in grams (g) are presented in Table 2. Specimens referred to as S0, S25, S50 and S75 have corresponding content of the aggregate of 0 wt%, 25 wt%, 50 wt%, 75 wt% in the concrete composition.

**Table 2**

| Specimen | Hybrid Cement | Silicious Aggregate | Water |
|---|---|---|---|
| S0 | 44.4 | 0 | 22.2 |
| S25 | 44.4 | 11.1 | 22.2 |
| S50 | 44.4 | 22.2 | 22.2 |
| S75 | 44.4 | 33.3 | 22.2 |

Aggregates were crushed to fine powder (size grain < 0.25 mm).

Then, powders were mixed using a mechanical blender at low speed (350 rpm) during 1 minute to obtain a uniform dispersion of silicious aggregates in the hybrid cement powder.

Ultra-pure water was added and the solution was stirred at 750 rpm during 1 min and 30 seconds. Then, the solution rested for 1 minute and was mixed again at 750 rpm during 1 min and 30 seconds.

The compositions were cast in cylindrical silicone moulds with d = 4 cm and sealed. After 24h, the specimens were removed from moulds and stored in environmental chamber with 100% RH during 28 days.

Finally, the cylinders were crushed to fine powder and measured.

Modulated Differential Scanning Calorimetry (MDSC) measurements were performed by means of Q2000TA Instrument to calculate the reversible part of the specific heat capacity of the sample. In these measurements, signals from evaporation of water molecules (irreversible process) are neglected. Aluminium pans were used in the experiment and the sample weights was about 30 mg. Experiment was performed on heating between 100 °C and 400 °C with a heating rate of 3 °C/min and modulated with ± 0.48 °C every 60 s.

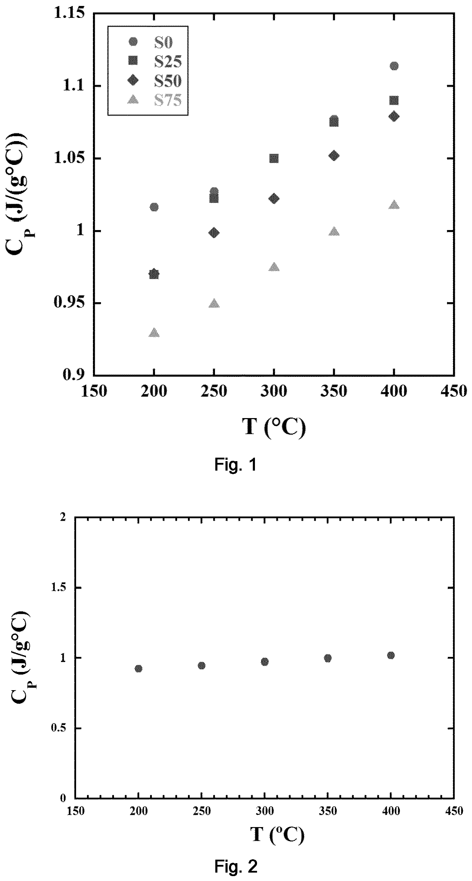

Results are represented in graph in Fig. 1.

As expected, when increasing the amount of aggregates the values of Cp decrease. However, even with the highest amount of silicious aggregates (75 wt%), the Cp is higher than 0.75 J/(g °C) in all the studied temperature range. As this value that can be considered satisfactory.

### Example 2

In this example, impact of aggregate nature on thermal diffusivity is analyzed. As shown in the Example 1, the values of Cp are satisfactory for TES applications even at high doses, aggregate/cement ratio = 0.75. The silicious aggregate S75 from the previous example is compared with steel slag aggregate, referred to as LKS. Mix proportions in grams (g) are presented in Table 3.

**Table 3**

| Specimen | Hybrid Cement | Silicious Aggregate | LKS | Water |
|---|---|---|---|---|
| S75 | 44.4 | 33.3 | 0 | 22.2 |
| LKS | 44.4 | 0 | 33.3 | 22.2 |

Aggregates were crushed to fine powder (size grain < 0.25 mm).

Then, powders were mixed using a mechanical blender at low speed (350 rpm) during 1 minute to obtain a uniform dispersion of silicious aggregates in the hybrid cement powder.

Ultra-pure water was added and the solution was stirred at 750 rpm during 1 min and 30 seconds. Hence, the solution rested for 1 minute and was mixed again at 750 rpm during 1 min and 30 seconds.

Compositions were cast in cylindrical silicone moulds with d = 4 cm and sealed. After 24h, the specimens were removed from moulds and stored in environmental chamber with 100% RH during 28 days.

Finally, the cylinders were crushed to fine powder and measured.

Modulated Differential Scanning Calorimetry (MDSC) measurements were performed by means of Q2000TA Instrument to calculate the reversible part of the specific heat capacity of the sample. In these measurements, signals from evaporation of water molecules (irreversible process) are neglected. Aluminium pans were used in the experiment and the sample weights was about 30 mg. Experiment was performed on heating between 100 °C and 400 °C with a heating rate of 3 °C/min and modulated with ± 0.48 °C every 60 s.

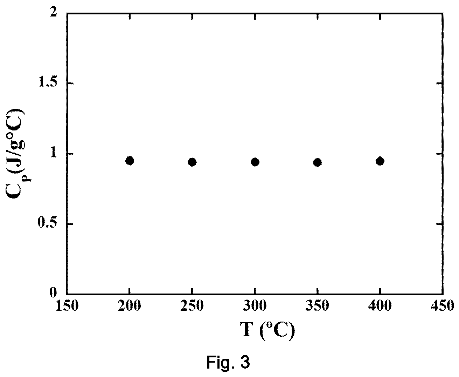

Specific heat capacity of S75 is represented in graph in Fig. 2, and specific heat capacity of LKS is represented in graph in Fig. 3.

Standard thermogravimetric analysis and thermal stability investigation were done by using a TGA-Q500 (TA Instruments). All measurements were conducted under high-purity nitrogen flow. Standard measurements were performed over a temperature range of 30-900 °C with a ramp rate of 10 °C/min. Thermal stability was investigated by heating the sample powder up to 400 °C with a heating rate of 10 °C/min followed by isothermal segment of 30 minutes. Therefore, 3 cycles consisted of two isothermal segments with a length of 30 mins at 250 °C and 400 °C were performed. Each temperature was reached with a cooling/heating rate of 10°C/min.

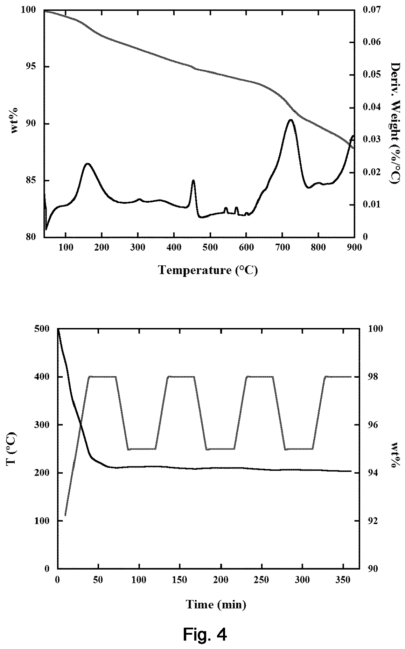

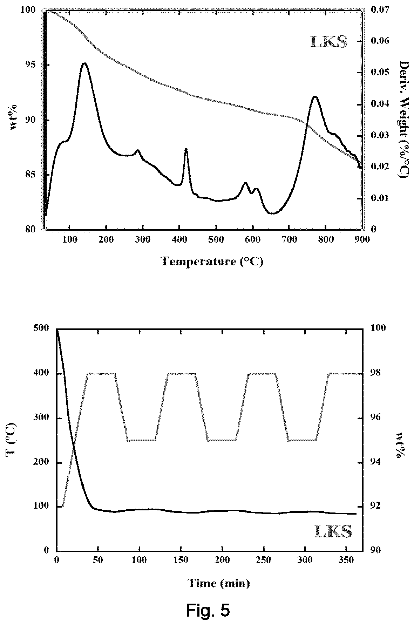

Thermogravimetric analysis measurements of S75 are represented in graphs in Fig. 4, and Thermogravimetric analysis measurements of LKS are represented in graphs in Fig. 5.

Thermal diffusivity was investigated by means of Laser Flash Analysis (LFA 457 Microflash). Sample powders (size grain < 64 µm) were compressed by a manual hydraulic press (SPECAC) applying 7 tons during 5 minutes. Therefore, the so-obtained pellet was investigated by LFA 457 Microflash. Measurements were made at room temperature, 50, 100, 200, 300, 400, 500, 600, 700, 800 and 900 °C. The heating rate was 10 °C/min. Five laser shots were made for each temperature, with intervals of 1.5 minutes between shots, to allow a homogenization of the temperature of the samples.

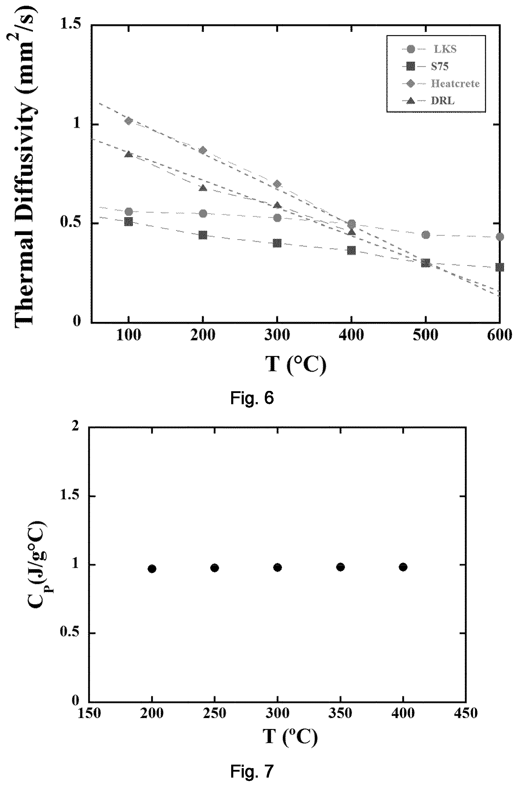

Results of thermal diffusivity of different TES media compared to Hybrid Cement and LKS specimen are represented in graph in Fig. 6.

The addition of LKS leads to an increase of thermal diffusivity. In all the temperature range investigated, Hybrid Cement and LKS specimen shows values of thermal diffusivity higher than 0.5 mm²/s. Moreover, when comparing the LKS results with those extrapolated at high temperature of commercial concretes for TES applications, Heatcrete and DRL, it is clear that the LKS mix appears to have better thermal diffusivity for applications at temperatures higher than 400 °C.

### Example 3

In this example, impact of aggregate nature on thermal stability is analyzed. Sample is composed of Hybrid cement in the amount of 44.4 g, Copper slag aggregate in the amount of 33.3 g and water 22.2 g. Aggregate/cement ratio = 0.75.

Aggregate was crushed to fine powder (size grain < 0.25 mm). Copper slag aggregate is referred to as BLACK.

Then, powders were mixed using a mechanical blender at low speed (350 rpm) during 1 minute to obtain a uniform dispersion of Copper slag aggregate in the hybrid cement powder.

Ultra-pure water was added and the solution was stirred at 750 rpm during 1 min and 30 seconds. Hence, the solution rested for 1 minute and was mixed again at 750 rpm during 1 min and 30 seconds.

Composition was cast in cylindrical silicone moulds with d = 4 cm and sealed. After 24h, the specimen was removed from the mould and stored in environmental chamber with 100% RH during 28 days.

Finally, the cylinder was crushed in fine powder and measured.

Modulated Differential Scanning Calorimetry (MDSC) measurements were performed by means of Q2000TA Instrument to calculate the reversible part of the specific heat capacity of the sample. In these measurements, signals from evaporation of water molecules (irreversible process) are neglected. Aluminium pans were used in the experiment and the sample weights was about 30 mg. Experiment was performed on heating between 100 °C and 400 °C with a heating rate of 3 °C/min and modulated with ± 0.48 °C every 60 s.

Specific heat capacity of the sample is represented in graph in Fig. 7.

Standard thermogravimetric analysis and thermal stability investigation were done by using a TGA-Q500 (TA Instruments). All measurements were conducted under high-purity nitrogen flow. Standard measurements were performed over a temperature range of 30-900 °C with a ramp rate of 10 °C/min. Thermal stability was investigated by heating the sample powder up to 400 °C with a heating rate of 10 °C/min followed by isothermal segment of 30 minutes. Therefore, 3 cycles consisted of two isothermal segments with a length of 30 mins at 250 °C and 400 °C were performed. Each temperature was reached with a cooling/heating rate of 10 °C/min.

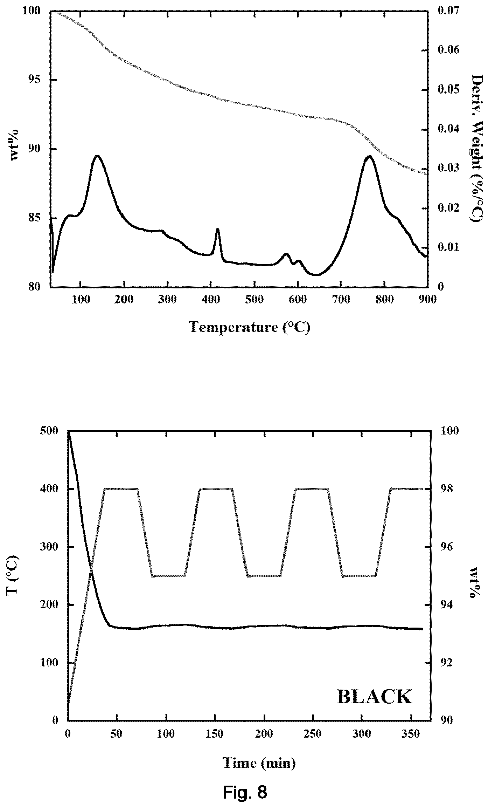

Thermogravimetric analysis measurements of Cooper slag, BLACK, are represented in graphs in Fig. 8.

Thermal diffusivity was investigated by means of Laser Flash Analysis (LFA 457 Microflash). Sample powder (size grain < 64 µm) was compressed by a manual hydraulic press (SPECAC) applying 7 tons during 5 minutes. Therefore, the so-obtained pellet was investigated by LFA 457 Microflash. Measurements were made at room temperature, 50, 100, 200, 300, 400, 500, 600, 700, 800 and 900 °C. The heating rate was 10 °C/min. Five laser shots were made for each temperature, with intervals of 1.5 minutes between shots, to allow a homogenization of the temperature of the sample.

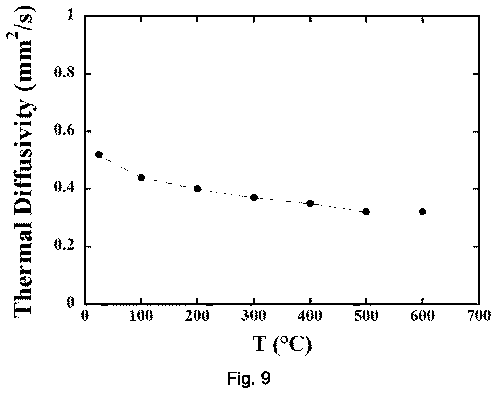

Results of thermal diffusivity are represented in graph in Fig. 9.

In comparison of results presented by Table 4 copper slag aggregates, BLACK, in hybrid cement composition lead to a weight loss of 0.37 wt% after 4 cycles between 250 °C and 400°C, that is high thermal stability of the specimen.

**Table 4**

| Sample | wt% 400-250 °C (4 cycles) |
|---|---|
| BLACK | 0.37 |
| LKS | 0.6 |
| Silicious Aggregates | 0.66 |
| Heatcrete | 0.58 |

### Industrial applicability

Thermal energy storage media based on concrete according to this invention can be used in various applications requiring effective thermal energy storage media, especially for high temperature applications. The specific geometry of such concrete products depends on conditions of their use and these are designed in a case by case basis. In general, the TES systems based on concrete are mainly big blocks of concrete containing a heat exchanger body, typically steel pipe, to separate heat transfer fluid from the TES media.

## Claims

1. Thermal energy storage media based on concrete, comprising alkali activated binder and an aggregate, **characterized in that** the alkali activated binder is hybrid cement and the aggregate is chosen from silicious aggregate, steel slag aggregate or copper aggregate, or their mixtures, in the amount up to 75 wt% in the concrete.

2. Thermal energy storage media according to claim 1, **characterized in that** hybrid cement is cement comprising Portland siliceous clinker in the amount of 5 to 40 wt%, preferably 10 to 30 wt%, 94.5 to 50 wt% of fly ash, or a mixture of fly ash and metallurgical slag, or metallurgical slag, and an alkaline activator in the amount of 0.5 to 10 wt.%, preferably 3 to 7 wt%, where the alkaline activator are alkaline wastewaters, leachates of red and brown mud landfills, red and brown mud being the waste from alkaline leaching of bauxite in Al₂O₃ production, and products formed thereof in the amount having content of active alkaline compound analytically represented as 0.01 to 6.5 wt% %NaO.

3. Thermal energy storage media according to claim 2, **characterized in that** the products produced from the alkaline wastewater and/or leachate are thick concentrate with high content of Na⁺ and OH⁻ and/or dry residue thereof, and/or salts from the alkaline wastewaters and/or leachates neutralization, and/or mixture of said salts with alkaline waters, leachates, concentrate, dry residue.

4. Thermal energy storage media according to claim 3, **characterized in that** the salts from the alkaline wastewaters and/or leachates neutralization, concentrate, dry residue are sulphates SO₄²⁻, sulphites SO₃²⁻, carbonates CO₃²⁻, hydrogen carbonates HCO₃⁻, silicates SiO₄⁴⁻, SiO₃²⁻, non-stoichiometric silicates Si_{X}O_{Y}^{Z-}, with predominantly bound Na⁺.

5. Thermal energy storage media according to claim 3 or 4, **characterized in that** the alkaline wastewaters and/or leachates, and/or concentrate contain an addition of acid H₂SO₄, H₂SO₃, H₂CO₃, and/or nano-SiO₂, micro-SiO₂, silica fume SiO₂ and/or gaseous SO₃, SO₂ and CO₂.

6. Thermal energy storage media according to claim 3, 4 or 5, **characterized in that** the alkaline wastewaters and/or leachates, and/or concentrate and products formed thereof contain an addition of waste inorganic salts based on Na₂SO₄, Na₂SO₄.10H₂O, Na₂SO₃, Na₂CO₃, Na₂CO₃.10H₂O, NaHCO₃, Na₄SO₄, Na₂SiO₃ and/or K₂SO₄, K₂SO₃, K₂CO₃, KHCO₃, K₄SiO₄, K₂SiO₃.

7. Use of hybrid cement as a binder for production of concrete thermal energy storage media.

8. Use according to claim 7, where hybrid cement is cement comprising Portland siliceous clinker in the amount of 5 to 40 wt%, preferably 10 to 30 wt%, 94.5 to 50 wt% of fly ash, or a mixture of fly ash and metallurgical slag, or metallurgical slag, and an alkaline activator in the amount of 0.5 to 10 wt.%, preferably 3 to 7 wt%, where the alkaline activator are alkaline wastewaters, leachates of red and brown mud landfills, red and brown mud being the waste from alkaline leaching of bauxite in Al₂O₃ production, and products formed thereof in the amount having content of active alkaline compound analytically represented as 0.01 to 6.5 wt% %NaO.

9. Use according to claim 8, where the products produced from the alkaline wastewater and/or leachate are thick concentrate with high content of Na⁺ and OH⁻ and/or dry residue thereof, and/or salts from the alkaline wastewaters and/or leachates neutralization, and/or mixture of said salts with alkaline waters, leachates, concentrate, dry residue.

10. Use according to claim 9, where the salts from the alkaline wastewaters and/or leachates neutralization, concentrate, dry residue are sulphates SO₄²⁻, sulphites SO₃²⁻, carbonates CO₃²⁻, hydrogen carbonates HCO₃⁻, silicates SiO₄⁴⁻, SiO₃²⁻, non-stoichiometric silicates Si_{X}O_{Y}^{Z-}, with predominantly bound Na⁺.

11. Use according to claim 9 or 10, where the alkaline wastewaters and/or leachates, and/or concentrate contain an addition of acid H₂SO₄, H₂SO₃, H₂CO₃, and/or nano-SiO₂, micro-SiO₂, silica fume SiO₂ and/or gaseous SO₃, SO₂ and CO₂.

12. Use according to claim 9, 10 or 11, where the alkaline wastewaters and/or leachates, and/or concentrate and products formed thereof contain an addition of waste inorganic salts based on Na₂SO₄, Na₂SO₄.10H₂O, Na₂SO₃, Na₂CO₃, Na₂CO₃.10H₂O, NaHCO₃, Na₄SO₄, Na₂SiO₃ and/or K₂SO₄, K₂SO₃, K₂CO₃, KHCO₃, K₄SiO₄, K₂SiO₃.
